# EUROPEAN PATENT APPLICATION

(11) **EP 4 178 257 A1**
(43) Date of publication of application: **10.05.2023**
(21) Application number: 21832089.3
(22) Date of filing: 30.06.2021
(51) Int. Cl.: H04W 36/00

(54) **CALL ORIGINATION ANOMALY HANDLING METHOD AND APPARATUS**

(30) Priority: 03.07.2020 CN 202010636448
(71) Applicant: Vivo Mobile Communication Co., Ltd., Dongguan, Guangdong 523863 (CN)
(72) Inventor: HU, Qun, Dongguan, Guangdong 523863 (CN)
(74) Representative: Lavoix
(86) International application number: PCT/CN2021/103676
(87) International publication number: WO 2022/002152

(57) **Abstract**

A method and apparatus for processing a call initiation anomaly are disclosed in this application. The method includes: sending a first call request message through a first PS domain; performing a first operation in a case that a first call initiation anomaly occurs, where the first operation includes any one of the following: sending the first call request message through a second PS domain; disabling a VoLTE function, and sending the first call request message through a CS domain; registering in the second PS domain again, and sending the first call request message through the second PS domain; and sending a second call request message to a first account through a target application program, where the first account corresponds to an account indicated by the first call request message.

## Description

### CROSS-REFERENCE TO RELATED APPLICATIONS

This application claims the priority of Chinese Patent Application No.202010636448.8 filed in China on July 3, 2020, which is incorporated herein by reference in its entirety.

### TECHNICAL FIELD

This application belongs to the field of communications technologies, and specifically, to a method and apparatus for processing a call initiation anomaly.

### BACKGROUND

Currently, at a call initiation stage (also referred to as call initiation before ringing) of an electronic device, that is, a stage when the electronic device calls out a call request message until a ringing prompt tone appears, if a call initiation anomaly occurs in the electronic device, the electronic device can fall back to a circuit switch (circuit switch, CS) domain, and call out the call request message again, that is, circuit switch fallback (circuit switch fallback, CSFB).

However, when some operators register on an IP multimedia subsystem (IP Multimedia Subsystem, IMS), the registration state is a long term evolution only (long term evolution only, LTE ONLY) state (that is, only processing a voice service in an LTE state), so that the electronic device cannot fall back to the CS domain, and cannot call out again when the call initiation anomaly occurs in the electronic device, thereby leading to a relatively low call success rate of the electronic device.

### SUMMARY

An objective of embodiments of this application is to provide a method and apparatus for processing a call initiation anomaly, which can resolve a problem that an existing electronic device cannot call out again when the call initiation anomaly occurs, leading to a relatively low call success rate of the electronic device.

To resolve the technical problem above, this application is implemented as follows.

According to a first aspect, the embodiments of this application provide a method for processing a call initiation anomaly, including: sending a first call request message through a first packet switch (packet switch, PS) domain; and performing a first operation in a case that a first call initiation anomaly occurs, where the first operation includes any one of the following: sending the first call request message through a second PS domain; disabling a voice over long term evolution (Voice over Long Term Evolution, VoLTE) function, and sending the first call request message through a CS domain; registering in the second PS domain again, and sending the first call request message through the second PS domain; and sending a second call request message to a first account through a target application program, where the first account corresponds to an account indicated by the first call request message.

According to a second aspect, the embodiments of this application provide an apparatus for processing a call initiation anomaly, including a sending module and an execution module. The sending module is configured to send a first call request message through a first PS domain; and the execution module is configured to perform a first operation in a case that a first call initiation anomaly occurs, where the first operation includes any one of the following: sending the first call request message through a second PS domain; disabling a VoLTE function, and sending the first call request message through a CS domain; registering in the second PS domain again, and sending the first call request message through the second PS domain; and sending a second call request message to a first account through a target application program, where the first account corresponds to an account indicated by the first call request message.

According to a third aspect, the embodiments of this application provide an electronic device, including a memory, a processor, and a program or instruction stored on the memory and runnable on the processor, where the program or instruction, when executed by the processor, implements the steps of the method for processing a call initiation anomaly according to the first aspect.

According to a fourth aspect, the embodiments of this application provide a readable storage medium, storing a program or instruction, where the program or instruction, when executed by a processor, implements the steps of the method for processing a call initiation anomaly according to the first aspect.

According to a fifth aspect, the embodiments of this application provide a chip, including a processor and a communication interface, where the communication interface is coupled to the processor, and the processor is configured to run a program or instructions to implement the method for processing a call initiation anomaly according to the first aspect.

In the embodiments of this application, the solution is: sending the first call request message through the first PS domain; and performing a first operation in a case that a first call initiation anomaly occurs, where the first operation includes any one of the following: sending the first call request message through the second PS domain; disabling the VoLTE function, and sending the first call request message through the CS domain; registering in the second PS domain again, and sending the first call request message through the second PS domain; and sending the second call request message to the first account through the target application program, where the first account corresponds to the account indicated by the first call request message. By means of the solution, when the call initiation anomaly occurs, the first call request message may be resent (that is, the first call request message may be called out again) through the first operation, or the second call request message may be sent to the account corresponding to the account indicated by the first call request message through the target application program, so that when the call initiation anomaly occurs, the call initiation anomaly can be directly dealt with, thereby avoiding a call failure caused by the call initiation anomaly and improving the call success rate.

### BRIEF DESCRIPTION OF THE DRAWINGS

FIG. 1 is a first schematic flowchart of a method for processing a call initiation anomaly according to an embodiment of this application;
FIG. 2 is a second schematic flowchart of a method for processing a call initiation anomaly according to an embodiment of this application;
FIG. 3 is a third schematic flowchart of a method for processing a call initiation anomaly according to an embodiment of this application;
FIG. 4 is a fourth schematic flowchart of a method for processing a call initiation anomaly according to an embodiment of this application;
FIG. 5 is a schematic structural diagram of an apparatus for processing a call initiation anomaly according to an embodiment of this application;
FIG. 6 is a schematic structural diagram of an electronic device according to an embodiment of this application; and
FIG. 7 is a schematic diagram of a hardware structure of an electronic device according to an embodiment of this application.

### DETAILED DESCRIPTION

The following clearly and completely describes the technical solutions in embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application without creative efforts shall fall within the protection scope of this application.

In the specification and claims of this application, the terms "first", "second", and the like are used to distinguish similar objects, but are not used to describe a specific sequence or order. It may be understood that the data used in such a way is interchangeable in proper circumstances, so that the embodiments of this application described herein can be implemented in other sequences than the sequence illustrated or described herein, and the objects distinguished through "first", "second", and the like are generally of a same type and the number of the objects are not limited, for example, a first object may be one or more than one. In addition, "and/or" in this specification and the claims represents at least one of the connected objects, and a character "/" used herein generally indicates an "or" relationship between associated objects.

In the embodiments of this application, the terms such as "exemplary" and "for example" are used to represent giving an example, an illustration, or a description. Any embodiment or design scheme described as "exemplary" or "for example" in the embodiments of this application should not be construed as being preferred or superior to other embodiments or design schemes. To be specific, the use of the word such as "exemplary" or "for example" is intended to present a related concept in a specific manner.

Some terms involved in the embodiments of this application are first explained and described below.

Call initiation anomaly: a call initiation anomaly refers to an anomaly occurs before receiving a ring response message after sending a first call request message. For example, a network temporary anomaly, a network call parameter anomaly, and the like.

It is to be noted that, a method for processing a call initiation anomaly according to the embodiments of this application may be performed by an apparatus for processing a call initiation anomaly or a control module configured to perform the method for processing a call initiation anomaly in the apparatus for processing a call initiation anomaly, or may be performed by an electronic device (the electronic device may include the apparatus for processing a call initiation anomaly in the embodiments of this application, or an independent apparatus for processing a call initiation anomaly). The method for processing a call initiation anomaly according to the embodiments of this application is exemplarily described in the embodiments of this application by using an electronic device as an example.

The method for processing a call initiation anomaly according to the embodiments of this application is described in detail below with reference to the accompany drawings through specific embodiments and application scenarios thereof.

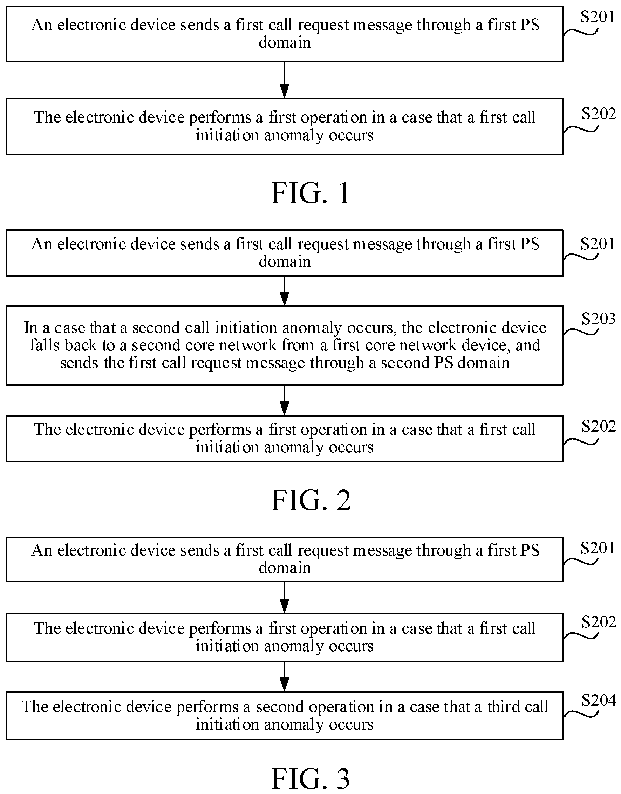

As shown in FIG. 1, an embodiment of this application provides a method for processing a call initiation anomaly, and the method may include the following S201 and S202.

S201: An electronic device sends a first call request message through a first PS domain.

In this embodiment of this application, the first call request message may be used for requesting a call connection establishment with a certain account, for example, establishing call connection with a certain subscriber identity module (subscriber identity module, SIM) card.

S202: The electronic device performs a first operation in a case that a first call initiation anomaly occurs.

The first operation may include any one of the following:
sending the first call request message through a second PS domain;
disabling a VoLTE function, and sending the first call request message through a CS domain;
registering in the second PS domain again, and sending the first call request message through the second PS domain; and
sending a second call request message to a first account through a target application program, where the first account corresponds to an account indicated by the first call request message.

It may be understood that the electronic device may improve a call success rate of the electronic device through a method of calling out again.

In this embodiment of this application, after the electronic device sends the first call request message through the first PS domain (that is, sending in the first PS domain), if the first call initiation anomaly occurs, the electronic device may resend the first call request message through the first operation, or send the second call request message corresponding to the first call request message through the target application program, so as to avoid a call failure caused by the call initiation anomaly, thereby improving a call success rate.

Optionally, in this embodiment of this application, when the electronic device receives the call request input of a user, the electronic device may generate, according to a session initiation protocol (session initiation protocol, SIP), a SIP invite (invite) message, that is, the first call request message, and then send the first call request message to an IMS network through the first PS domain.

Optionally, in this embodiment of this application, the first call initiation anomaly may be any possible call initiation anomaly, such as a network temporary anomaly, a network call parameter anomaly, or an electronic device call parameter anomaly. Details may be determined according to an actual use requirement, which is not limited in this embodiment of this application.

Optionally, in this embodiment of this application, the first PS domain and the second PS domain may be the same PS domain or may be different PS domains. Details may be determined according to an actual use requirement, which is not limited in this embodiment of this application.

Optionally, in this embodiment of this application, the first PS domain may be a 5G-PS domain or may be a 4G-PS domain. Details may be determined according to an actual use requirement, which is not limited in this embodiment of this application.

It is to be noted that, in this embodiment of this application, when the electronic device is registered on a 4G network and a voice service is registered on the VoLTE, the first PS domain may be the 4G-PS domain; and when the electronic device is registered on a 5G network and the voice service is registered on a voice over new radio (voice over new radio, VoNR), the first PS domain may be the 5G-PS domain.

In this embodiment of this application, the second PS domain may be the 4G-PS domain.

In this embodiment of this application, when the first PS domain and the second PS domain are the same PS domain, the sending the first call request message through a second PS domain may be understood as: the electronic device calls out (sends) the first call request message again in the first PS domain, so as to avoid a call initiation failure caused by the network temporary anomaly, thereby improving a call initiation success rate.

It is to be noted that, in this embodiment of this application, generally the network temporary anomaly lasts for a short time and is accidental, so that when the electronic device calls out the first call request message again in the first PS domain, a success rate of this calling out is relatively large.

In this embodiment of this application, after the electronic device calls out the first call request message again in the first PS domain, if the call initiation anomaly still occurs, the electronic device may call out the first call request message again in the first PS domain, so as to further avoid the call initiation failure caused by the network temporary anomaly, thereby further improving the call initiation success rate.

Optionally, in this embodiment of this application, a quantity of times of calling out the first call request message through the first PS domain by the electronic device may be N (N is an integer greater than 1). Details may be determined according to an actual use requirement, which is not limited in this embodiment of this application.

N may be a value of a threshold set by a manufacturer of the electronic device in the electronic device.

In this embodiment of this application, for the disabling a VoLTE function, and sending the first call request message through a CS domain, the electronic device may fall back to the CS domain through disabling the VoLTE function, so as to avoid a situation that the electronic device cannot fall back to the CS domain and cannot call out a call request message again because the electronic device is in an LTE ONLY mode, so as to ensure that the electronic device can call out again when the call initiation anomaly occurs, thereby improving the call success rate of the electronic device.

In this embodiment of this application, for the registering in the second PS domain again, and sending the first call request message through the second PS domain, the electronic device may re-access the network (that is, refresh the registration) by means of detaching (detach) and attaching (attach) in the second PS domain, so as to register in the second PS domain again and refresh an electronic device call parameter and a network call parameter. In this way, after the electronic device registers in the second PS domain again, when the electronic device sends the first call request message again through the second PS domain, the call initiation failure caused by the electronic device call parameter and/or the network call parameter may be avoided, so as to improve the call initiation success rate of the electronic device.

In this embodiment of this application, the target application program may be an application program with a communication function in the electronic device. Specifically, the target application program may be an OTT (over-the-top) voice application program.

The target application program may store an account corresponding to the account indicated by the first call request message.

Optionally, in this embodiment of this application, the second call request message may be a video call request message, or may be a voice call request message. Details may be determined according to an actual use requirement, which is not limited in this embodiment of this application.

In this embodiment of this application, the second call request message may be a call request message called out through a data network. In this way, when the call initiation anomaly occurs in the electronic device, the electronic device may directly call out the second call request message through the data network, so as to further improve the call initiation success rate of the electronic device, thereby improving the call experience of the user.

Through the processing method for the call initiation anomaly according to the embodiments of this application, when the call initiation anomaly occurs, the first call request message may be resent (that is, the first call request message may be called out again) through the first operation, or the second call request message may be sent to the account corresponding to the account indicated by the first call request message through the target application program, so that when the call initiation anomaly occurs, the call initiation anomaly can be directly dealt with, thereby avoiding a call failure caused by the call initiation anomaly and improving the call success rate.

Optionally, in this embodiment of this application, in a case that the first PS domain and the second PS domain are different, before the electronic device performs the first operation, the electronic device may first fall back to an access network device corresponding to the second PS domain from an access network device corresponding to the first PS domain, and then perform the first operation.

In this embodiment of this application, the foregoing S202 may be specifically implemented through the following S202a and S202b.

S202a: The electronic device falls back to a second access network device from a first access network device in a case that the first call initiation anomaly occurs.

The first access network device may be the access network device corresponding to the first PS domain, and the second access network device may be the access network device corresponding to the second PS domain.

S202b: The electronic device performs the first operation.

In this embodiment of this application, in a case that the first call initiation anomaly occurs, the electronic device may fall back to the second access network device from the first access network device, and then perform the first operation.

Optionally, in this embodiment of this application, the first access network device may be a 5G access network device (for example, an NR device, or the like), and the second access network device may be a 4G access network device (for example, an eNB, or the like).

Certainly, during an actual implementation, the first access network device and the second access network device may further be any other possible access network device. Details may be determined according to an actual use requirement, which is not limited in this embodiment of this application.

In this embodiment of this application, when the first access network device is a 5G access network device, and the second access network device is a 4G access network device, the first PS domain may be the 5G-PS domain, and the second PS domain may be the 4G-PS domain.

In this embodiment of this application, that the electronic device falls back to the second access network device from the first access network device may be implemented through a radio access network (radio access network, RAN) fallback. Specifically, the electronic device may fall back to accessing a 5G core network device through a 4G RAN from accessing the 5G core network device through the NR device. In this way, the electronic device falls back to a 4G access network from an access network to which the electronic device is connected, so that the electronic device may call out the call request message (the first call request message or the second call request message) again in a 4G network, thereby avoiding the call initiation anomaly caused by a 5G network anomaly and improving the call initiation success rate of the electronic device.

Optionally, in this embodiment of this application, after the electronic device sends the first call request message through the first PS domain, before the first call initiation anomaly occurs, if a call initiation anomaly occurs (for example, a second call initiation anomaly in this embodiment of this application), the electronic device may fall back to a core network device corresponding to the second PS domain from a core network device corresponding to the first PS domain, and send the first call request message through the second PS domain.

With reference to FIG. 1, as shown in FIG. 2, after S201 and before S202, the method for processing a call initiation anomaly according to this embodiment of this application may further include the following S203.

S203: In a case that the second call initiation anomaly occurs, the electronic device falls back to a second core network from a first core network device, and sends the first call request message through the second PS domain.

The first core network device may be the core network device corresponding to the first PS domain, and the second core network device may be the core network device corresponding to the second PS domain.

In this embodiment of this application, after the electronic device sends the first call request message through the first PS domain, before the first call initiation anomaly occurs, if the second call initiation anomaly occurs, the electronic device may fall back to the second core network device from the first core network device, and send the first call request message through the second PS domain.

Optionally, in this embodiment of this application, the second call initiation anomaly may be a call initiation anomaly the same as or different from the first call initiation anomaly. Details may be determined according to an actual use requirement, which is not limited in this embodiment of this application.

Optionally, in this embodiment of this application, the first core network device may be the 5G core network device, and the second core network device may be a 4G core network device.

Certainly, during an actual implementation, the first core network device and the second core network device may further be any other possible core network device. Details may be determined according to an actual use requirement, which is not limited in this embodiment of this application.

In this embodiment of this application, when the first core network device is the 5G core network device, and the second core network device is the 4G core network device, the first PS domain may be the 5G-PS domain, and the second PS domain may be the 4G-PS domain.

In this embodiment of this application, that the electronic device falls back to the second access network device from the first access network device may be implemented through an evolved packet system (evolved packet system, EPS) fallback. Specifically, the electronic device may fall back to accessing the IMS network through the 4G core network device from accessing the IMS network through the 5G core network device, to implement falling back to the second core network device from the first core network device, which causes a fallback to a 4G voice from a 5G voice, so that the electronic device may call out the first call request message again in the 4G-PS domain.

Optionally, in this embodiment of this application, in a case that the first operation is to send the first call request message through the second PS domain, after the electronic device performs the first operation, if a call initiation anomaly occurs (for example, a third call initiation anomaly in this embodiment of this application) again, the electronic device may perform another operation (for example, a second operation in this embodiment of this application) in the first operation other than sending the first call request message through the second PS domain, and deal with the call initiation anomaly again.

With reference to FIG. 1, as shown in FIG. 3, after S202, the method for processing a call initiation anomaly according to this embodiment of this application may further include the following S204.

S204: The electronic device performs the second operation in a case that the third call initiation anomaly occurs.

The second operation may include any one of the following:
disabling the VoLTE function, and sending the first call request message through the CS domain;
registering in the second PS domain again, and sending the first call request message through the second PS domain; and
sending the second call request message to the first account through the target application program.

In this embodiment of this application, after the electronic device performs the first operation (sending the first call request message through the second PS domain), if the third call initiation anomaly occurs again, the electronic device may perform the second operation, and deal with the call initiation anomaly again, thereby further improving the call initiation success rate.

Optionally, in this embodiment of this application, the third call initiation anomaly may be a call initiation anomaly the same as or different from the second call initiation anomaly. Details may be determined according to an actual use requirement, which is not limited in this embodiment of this application.

It is to be noted that, in this embodiment of this application, for the related description of "disabling the VoLTE function, and sending the first call request message through the CS domain", "registering in the second PS domain again, and sending the first call request message through the second PS domain", and "sending the second call request message to the first account through the target application program", reference may be made to the detailed description in the foregoing embodiments for details, and the details will not be described herein again to avoid repetition.

In this embodiment of this application, after the electronic device deals with the call initiation anomaly, if the call initiation anomaly further occurs, the electronic device may deal with the call initiation anomaly in other processing manners, so as to deal with the call initiation anomalies caused by different reasons, thereby further improving the call initiation success rate.

Optionally, in this embodiment of this application, in a case that the second operation is to disable the VoLTE function, and send the first call request message through the CS domain, after the electronic device performs the second operation, if a call initiation anomaly occurs (for example, a fourth call initiation anomaly in this embodiment of this application) again, the electronic device may perform a third operation, and deal with the call initiation anomaly again.

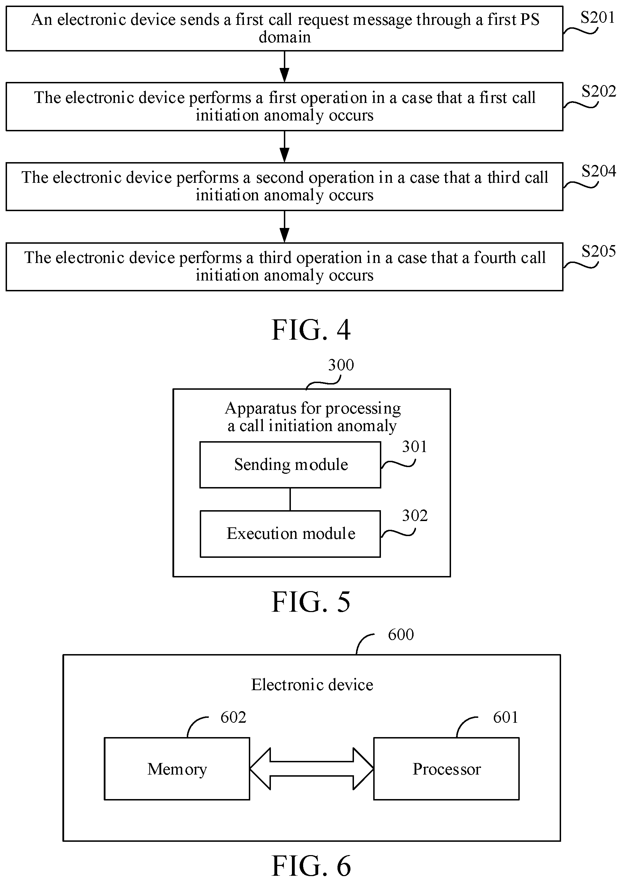

With reference to FIG. 3, as shown in FIG. 4, after S204, the method for processing a call initiation anomaly according to this embodiment of this application may further include the following S205.

S205: The electronic device performs the third operation in a case that the fourth call initiation anomaly occurs.

The third operation may include any one of the following:
registering in the second PS domain again, and sending the first call request message through the second PS domain; and
sending the second call request message to the first account through the target application program.

It is to be noted that, in this embodiment of this application, for the related description of "registering in the second PS domain again, and sending the first call request message through the second PS domain", and "sending the second call request message to the first account through the target application program", reference may be made to the detailed description in the foregoing embodiments for details, and the details will not be described herein again to avoid repetition.

In this embodiment of this application, after the electronic device deals with the call initiation anomaly through the second operation, if the call initiation anomaly still occurs, the electronic device may deal with the call initiation anomaly in other processing manners, so as to deal with the call initiation anomalies caused by different reasons, thereby further improving the call initiation success rate.

Optionally, in this embodiment of this application, the step that the electronic device sends the second call request message to the first account through the target application program may be implemented through the following step A and step B.

Step A: The electronic device determines the first account from the target application program according to the first call request message.

Step B: The electronic device sends the second call request message to the first account through the target application program.

In this embodiment of this application, when the electronic device sends the second call request message to the first account through the target application program, the electronic device may first determine the first account from the target application program according to the first call request message, and then send the second call request message to the first account through the target application program.

It is to be noted that, in this embodiment of this application, the electronic device may send the second call request message to the first account through the data network, so as to avoid the call initiation failure caused by the network call parameter anomaly and the electronic device call parameter anomaly.

The apparatus for processing a call initiation anomaly according to the embodiments of this application is described by using an example in which the apparatus for processing a call initiation anomaly performs the method for processing a call initiation anomaly in the embodiments of this application.

As shown in FIG. 5, the embodiments of this application provide an apparatus 300 for processing a call initiation anomaly, including a sending module 301 and an execution module 302. The sending module 301 is configured to send a first call request message through a first PS domain; and the execution module 302 is configured to perform a first operation in a case that a first call initiation anomaly occurs, where the first operation includes any one of the following: sending the first call request message through a second PS domain; disabling a VoLTE function, and sending the first call request message through a CS domain; registering in the second PS domain again, and sending the first call request message through the second PS domain; and sending a second call request message to a first account through a target application program, where the first account corresponds to an account indicated by the first call request message.

Through the apparatus for processing a call initiation anomaly according to the embodiments of this application, when the call initiation anomaly occurs, the first call request message may be resent (that is, the first call request message may be called out again) through the first operation, or the second call request message may be sent to the account corresponding to the account indicated by the first call request message through the target application program, so that when the call initiation anomaly occurs, the call initiation anomaly can be directly dealt with, thereby avoiding a call failure caused by the call initiation anomaly and improving the call success rate.

Optionally, in this embodiment of this application, the first PS domain and the second PS domain are different; and the execution module 302 is further configured to fall back to a second access network device from a first access network device before performing the first operation, where the first access network device is an access network device corresponding to the first PS domain, and the second access network device is an access network device corresponding to the second PS domain.

Optionally, in this embodiment of this application, the execution module 302 is further configured to, after the sending module 301 sends the first call request message through the first PS domain, before the first call initiation anomaly occurs, in a case that a second call initiation anomaly occurs, fall back to a second core network from a first core network device; and the sending module 301 is configured to send the first call request message through the second PS domain, where the first core network device is a core network device corresponding to the first PS domain, and the second core network device is a core network device corresponding to the second PS domain.

Optionally, in this embodiment of this application, the first operation is to send the first call request message through the second PS domain; and the execution module 302 is further configured to, after performing the first operation, perform a second operation in a case that a third call initiation anomaly occurs, where the second operation includes any one of the following: disabling the VoLTE function, and sending the first call request message through the CS domain; registering in the second PS domain again, and sending the first call request message through the second PS domain; and sending the second call request message to the first account through the target application program.

Through the apparatus for processing a call initiation anomaly according to this embodiment of this application, after the apparatus for processing a call initiation anomaly deals with the call initiation anomaly, if the call initiation anomaly further occurs, the apparatus for processing a call initiation anomaly may deal with the call initiation anomaly in other processing manners, so as to deal with the call initiation anomalies caused by different reasons, thereby further improving the call initiation success rate.

Optionally, in this embodiment of this application, the second operation is to disable the VoLTE function and send the first call request message through the CS domain; and the execution module 302 is further configured to, after performing the second operation, perform a third operation in a case that a fourth call initiation anomaly occurs, where the third operation includes any one of the following: registering in the second PS domain again, and sending the first call request message through the second PS domain; and sending the second call request message to the first account through the target application program.

Through the apparatus for processing a call initiation anomaly according to this embodiment of this application, after the apparatus for processing a call initiation anomaly deals with the call initiation anomaly through the second operation, if the call initiation anomaly still occurs, the apparatus for processing a call initiation anomaly may deal with the call initiation anomaly in other processing manners, so as to deal with the call initiation anomalies caused by different reasons, thereby further improving the call initiation success rate.

Optionally, in this embodiment of this application, the sending module includes a determining submodule and a sending submodule; the determining submodule is configured to determine the first account from the target application program according to the first call request message; and the sending submodule is configured to send the second call request message to the first account through the target application program.

The apparatus for processing a call initiation anomaly in this embodiment of this application may be an apparatus, or may be a component, an integrated circuit, or a chip in an electronic device. The apparatus may be a mobile electronic device or may be a non-mobile electronic device. For example, the mobile electronic device may be a mobile phone, a tablet computer, a notebook computer, a palm computer, an in-vehicle electronic device, a wearable device, an ultra-mobile personal computer (ultra-mobile personal computer, UMPC), a netbook, or a personal digital assistant (personal digital assistant, PDA); and the non-mobile electronic device may be a personal computer (personal computer, PC), a television (television, TV), a teller machine, or an automated machine, which are not specifically limited in this embodiment of this application.

The apparatus for processing a call initiation anomaly in this embodiment of this application may be an apparatus with an operating system. The operating system may be an Android (Android) operating system, an iOS operating system, or another possible operating system, which is not specifically limited in this embodiment of this application.

The apparatus for processing a call initiation anomaly according to this embodiment of this application can implement all processes implemented by the method embodiments shown in FIG. 1 to FIG. 4, and details are not described herein again to avoid repetition.

Optionally, as shown in FIG. 6, the embodiments of this application further provide an electronic device 600, including a processor 601, a memory 602, and a program or instruction stored in the memory 602 and runnable on the processor 601, where the program or instruction, when executed by the processor 601, implements each process of the foregoing method embodiments for a call initiation anomaly, and the same technical effects can be achieved. To avoid repetition, details are not described herein again.

It is to be noted that, the electronic device in this embodiment of this application includes the mobile electronic device and the non-mobile electronic device.

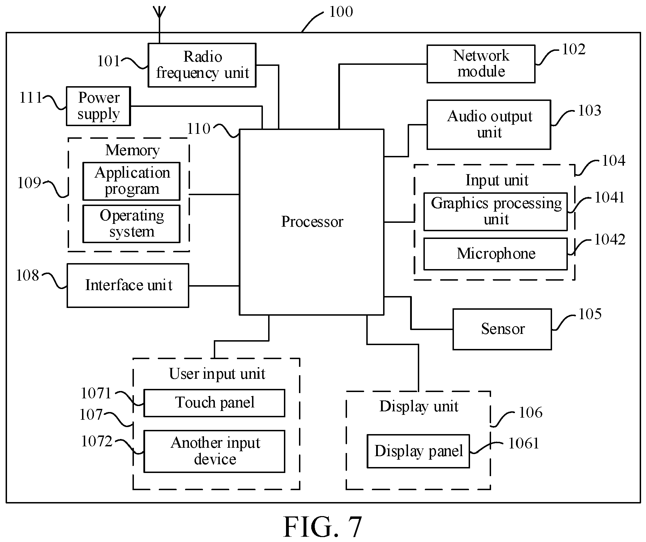

FIG. 7 is a schematic diagram of a hardware structure of an electronic device according to an embodiment of this application.

The electronic device 100 includes, but is not limited to, components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include a power supply 111 (such as a battery) for supplying power to the components. The power supply may be logically connected to the processor 110 by using a power management system, thereby implementing functions such as charging, discharging, and power consumption management by using the power management system. The structure of the electronic device shown in FIG. 7 constitutes no limitation on the electronic device, and the electronic device may include more or fewer components than those shown in the figure, or some components may be combined, or a different component deployment may be used, which are not described herein again.

The radio frequency unit 101 is configured to send a first call request message through a first PS domain; and the processor 110 is configured to perform a first operation in a case that a first call initiation anomaly occurs, where the first operation includes any one of the following: sending the first call request message through a second PS domain; disabling a VoLTE function, and sending the first call request message through a CS domain; registering in the second PS domain again, and sending the first call request message through the second PS domain; and sending a second call request message to a first account through a target application program, where the first account corresponds to an account indicated by the first call request message.

Through the apparatus for processing a call initiation anomaly according to the embodiments of this application, when the call initiation anomaly occurs, the first call request message may be resent (that is, the first call request message may be called out again) through the first operation, or the second call request message may be sent to the account corresponding to the account indicated by the first call request message through the target application program, so that when the call initiation anomaly occurs, the call initiation anomaly can be directly dealt with, thereby avoiding a call failure caused by the call initiation anomaly and improving the call success rate.

Optionally, in this embodiment of this application, the first PS domain and the second PS domain are different; and the processor 110 is further configured to fall back to a second access network device from a first access network device before performing the first operation, where the first access network device is an access network device corresponding to the first PS domain, and the second access network device is an access network device corresponding to the second PS domain.

Optionally, in this embodiment of this application, the processor 110 is further configured to, after the radio frequency unit 101 sends the first call request message through the first PS domain, before the first call initiation anomaly occurs, in a case that a second call initiation anomaly occurs, fall back to a second core network from a first core network device; and the radio frequency unit 101 is configured to send the first call request message through the second PS domain, where the first core network device is a core network device corresponding to the first PS domain, and the second core network device is a core network device corresponding to the second PS domain.

Optionally, in this embodiment of this application, the first operation is to send the first call request message through the second PS domain; and the processor 110 is further configured to, after performing the first operation, perform a second operation in a case that a third call initiation anomaly occurs, where the second operation includes any one of the following: disabling the VoLTE function, and sending the first call request message through the CS domain; registering in the second PS domain again, and sending the first call request message through the second PS domain; and sending the second call request message to the first account through the target application program.

Through the apparatus for processing a call initiation anomaly according to this embodiment of this application, after the electronic device deals with the call initiation anomaly, if the call initiation anomaly further occurs, the electronic device may deal with the call initiation anomaly in other processing manners, so as to deal with the call initiation anomalies caused by different reasons, thereby further improving the call initiation success rate.

Optionally, in this embodiment of this application, the second operation is to disable the VoLTE function and send the first call request message through the CS domain; and the processor 110 is further configured to, after performing the second operation, perform a third operation in a case that a fourth call initiation anomaly occurs, where the third operation includes any one of the following: registering in the second PS domain again, and sending the first call request message through the second PS domain; and sending the second call request message to the first account through the target application program.

Through the apparatus for processing a call initiation anomaly according to this embodiment of this application, after the electronic device deals with the call initiation anomaly through the second operation, if the call initiation anomaly still occurs, the electronic device may deal with the call initiation anomaly in other processing manners, so as to deal with the call initiation anomalies caused by different reasons, thereby further improving the call initiation success rate.

Optionally, in this embodiment of this application, the radio frequency unit 101 is configured to determine the first account from the target application program according to the first call request message, and send the second call request message to the first account through the target application program.

It is to be noted that, in this embodiment of this application, the sending module 301 in the schematic structural diagram (for example, FIG. 5 above) of the foregoing apparatus for processing a call initiation anomaly may be implemented by using the foregoing radio frequency unit 101; and the execution module 302 in the schematic structural diagram of the foregoing apparatus for processing a call initiation anomaly may be implemented by using the foregoing processor 110.

It is to be understood that, in this embodiment of this application, the input unit 104 may include a graphics processing unit (Graphics Processing Unit, GPU) 1041 and a microphone 1042, and the graphics processing unit 1041 processes static pictures or video image data obtained by an image capturing device (such as a camera) in a video capturing mode or an image capturing mode. The display unit 106 may include a display panel 1061, and the display panel 1061 may be configured by using a liquid crystal display, an organic lightemitting diode, or the like. The user input unit 107 includes a touch panel 1071 and another input device 1072. The touch panel 1071 is also referred to as a touch screen. The touch panel 1071 may include two parts: a touch detection apparatus and a touch controller. The another input device 1072 may include, but is not limited to, a physical keyboard, a functional key (such as a volume control key or a switch key), a track ball, a mouse, and a joystick, which are not described herein again. The memory 109 may be configured to store a software program and various data, including, but not limited to an application program and an operating system. The processor 110 may integrate an application processor and a modem processor, where the application processor mainly processes an operating system, a user interface, an application program, and the like, and the modem processor mainly processes wireless communication. It may be understood that the foregoing modem may either not be integrated into the processor 110.

The embodiments of this application further provide a readable storage medium, storing a program or instruction, where the program or instruction, when executed by a processor, implements each process of the foregoing method embodiments for a call initiation anomaly, and the same technical effects can be achieved. To avoid repetition, details are not described herein again.

The foregoing processor is the processor in the electronic device described in the foregoing embodiment. The readable storage medium may include a computer-readable storage medium, such as, a read-only memory (Read-Only Memory, ROM), a random access memory (Random Access Memory, RAM), a magnetic disk, or an optical disk.

The embodiments of this application further provide a chip, including a processor and a communication interface, where the communication interface is coupled to the processor, and the processor is configured to run a program or instructions to implement each process of the foregoing method embodiments for a call initiation anomaly and can achieve the same technical effects. To avoid repetition, details are not described herein again.

It is to be understood that the chip mentioned in this embodiment of this application may also be referred to as a system-level chip, a system chip, a chip system, a system chip on a chip, or the like.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by a sentence "including one" does not exclude that there are still other same elements in the process, method, object, or apparatus. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the descriptions of the foregoing implementations, a person skilled in the art may clearly understand that the method according to the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a software product. The computer software product is stored in a storage medium (such as a ROM/RAM, a magnetic disk, or an optical disk) and includes several instructions for instructing an electronic device (which may be a mobile phone, a computer, a server, an air conditioner, a network device, or the like) to perform the methods of the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

## Claims

1. A method for processing a call initiation anomaly, comprising:
sending a first call request message through a first packet switch PS domain; and
performing a first operation in a case that a first call initiation anomaly occurs, wherein the first operation comprises any one of the following:
sending the first call request message through a second PS domain;
disabling a voice over long term evolution VoLTE function, and sending the first call request message through a circuit switch CS domain;
registering in the second PS domain again, and sending the first call request message through the second PS domain; and
sending a second call request message to a first account through a target application program, wherein the first account corresponds to an account indicated by the first call request message.

2. The method according to claim 1, wherein the first PS domain and the second PS domain are different; and
before the performing a first operation, the method further comprises:
falling back to a second access network device from a first access network device, wherein the first access network device is an access network device corresponding to the first PS domain, and the second access network device is an access network device corresponding to the second PS domain.

3. The method according to claim 1 or 2, wherein after the sending a first call request message through a first PS domain, before the first call initiation anomaly occurs, the method further comprises:
in a case that a second call initiation anomaly occurs, falling back to a second core network from a first core network device, and sending the first call request message through the second PS domain, wherein
the first core network device is a core network device corresponding to the first PS domain, and the second core network device is a core network device corresponding to the second PS domain.

4. The method according to claim 1, wherein the first operation is to send the first call request message through the second PS domain; and
after the performing a first operation, the method further comprises:
performing a second operation in a case that a third call initiation anomaly occurs, wherein the second operation comprises any one of the following:
disabling the VoLTE function, and sending the first call request message through the CS domain;
registering in the second PS domain again, and sending the first call request message through the second PS domain; and
sending the second call request message to the first account through the target application program.

5. The method according to claim 4, wherein the second operation is to disable the VoLTE function and send the first call request message through the CS domain; and
after the performing a second operation, the method further comprises:
performing a third operation in a case that a fourth call initiation anomaly occurs, wherein the third operation comprises any one of the following:
registering in the second PS domain again, and sending the first call request message through the second PS domain; and
sending the second call request message to the first account through the target application program.

6. The method according to claim 1, wherein the sending a second call request message to a first account through a target application program comprises:
determining the first account from the target application program according to the first call request message; and
sending the second call request message to the first account through the target application program.

7. An apparatus for processing a call initiation anomaly, comprising a sending module and an execution module, wherein
the sending module is configured to send a first call request message through a first packet switch PS domain; and
the execution module is configured to perform a first operation in a case that a first call initiation anomaly occurs, wherein the first operation comprises any one of the following:
sending the first call request message through a second PS domain;
disabling a voice over long term evolution VoLTE function, and sending the first call request message through a circuit switch CS domain;
registering in the second PS domain again, and sending the first call request message through the second PS domain; and
sending a second call request message to a first account through a target application program, wherein the first account corresponds to an account indicated by the first call request message.

8. The apparatus for processing a call initiation anomaly according to claim 7, wherein the first PS domain and the second PS domain are different; and
the execution module is further configured to fall back to a second access network device from a first access network device before performing the first operation, wherein the first access network device is an access network device corresponding to the first PS domain, and the second access network device is an access network device corresponding to the second PS domain.

9. The apparatus for processing a call initiation anomaly according to claim 7 or 8, wherein the execution module is further configured to, after the sending module sends the first call request message through the first PS domain, before the first call initiation anomaly occurs, in a case that a second call initiation anomaly occurs, fall back to a second core network from a first core network device; and
the sending module is configured to send the first call request message through the second PS domain, wherein
the first core network device is a core network device corresponding to the first PS domain, and the second core network device is a core network device corresponding to the second PS domain.

10. The apparatus for processing a call initiation anomaly according to claim 7, wherein the first operation is to send the first call request message through the second PS domain; and
the execution module is further configured to, after performing the first operation, perform a second operation in a case that a third call initiation anomaly occurs, wherein the second operation comprises any one of the following:
disabling the VoLTE function, and sending the first call request message through the CS domain;
registering in the second PS domain again, and sending the first call request message through the second PS domain; and
sending the second call request message to the first account through the target application program.

11. The apparatus for processing a call initiation anomaly according to claim 10, wherein the second operation is to disable the VoLTE function and send the first call request message through the CS domain; and
the execution module is further configured to, after performing the second operation, perform a third operation in a case that a fourth call initiation anomaly occurs, wherein the third operation comprises any one of the following:
registering in the second PS domain again, and sending the first call request message through the second PS domain; and
sending the second call request message to the first account through the target application program.

12. The apparatus for processing a call initiation anomaly according to claim 7, wherein the sending module comprises a determining submodule and a sending submodule;
the determining submodule is configured to determine the first account from the target application program according to the first call request message; and
the sending submodule is configured to send the second call request message to the first account through the target application program.

13. An electronic device, comprising a processor, a memory, and a program or instruction stored on the memory and runnable on the processor, wherein the program or instruction, when executed by the processor, implements the method for processing a call initiation anomaly according to any one of claims 1 to 6.

14. A readable storage medium, storing a program or instruction, wherein the program or instruction, when executed by a processor, implements the method for processing a call initiation anomaly according to any one of claims 1 to 6.

15. A computer program product, wherein the computer program product is executed by at least one processor to implement the method for processing a call initiation anomaly according to any one of claims 1 to 6.

16. An electronic device, configured to perform the steps of the method for processing a call initiation anomaly according to any one of claims 1 to 6.
